# EUROPÄISCHE PATENTANMELDUNG

(11) **EP 2 196 584 A1**
(43) Veröffentlichungstag der Anmeldung: **16.06.2010**
(21) Anmeldenummer: 08405305.7
(22) Anmeldetag: 15.12.2008
(51) Int. Cl.: E03C 1/02, F16L 3/12, F16L 3/24, F24D 3/10

(54) **Verteiler für eine Wasserleitungsanlage**

(71) Anmelder: Geberit International AG, 8645 Jona (CH)
(72) Erfinder: Wyss, Roger, 8633 Wolfhausen (CH); Sprotte, Matthias, 8645 Jona (CH); Ricciardi, Nicola, 8808 Pfäffikon (CH)
(74) Vertreter: Groner, Manfred

(57) **Zusammenfassung**

Der Verteiler besitzt wenigstens ein Hauptrohr (7,7'), das mehrere Abgangsstutzen (9,9') aufweist. Mit Haltemitteln ist das wenigstens eine Hauptrohr (7,7') beispielsweise an der Rückwand (5) eines Verteilerkastens (2) befestigbar. Die Haltemittel weisen wenigstens zwei Halteelemente (14,14') auf, die jeweils an einem Ende lösbar an einer Schiene (8,8') verrastbar sind. Die Halteelemente (14,14') sind vorzugsweise jeweils mit einem Drehrastbolzen (15) in einer Nut (19) der Schiene (8,8') verrastbar.

## Beschreibung

Die vorliegende Erfindung betrifft einen Verteiler für eine Wasserleitungsanlage, mit wenigstens einem Hauptrohr, das mehrere Abgangsstutzen aufweist und mit Haltemitteln, mit denen das wenigstens eine Hauptrohr befestigbar ist.

Verteiler für Wasserleitungsanlagen dienen dazu, an zentral gelegener Stelle innerhalb eines Gebäudes die Rohrabgänge von Verteilungsleitungen zu den verschiedenen Steigleitungen und Versorgungsgruppen zusammen zu fassen. Sie können ein oder mehrere Hauptrohre aufweisen, die jeweils Abgangsstutzen und vielfach auch aufgesetzte Absperrarmaturen aufweisen. Die Abgangsstutzen können nach oben, nach unten oder seitlich wegführen. Bekannt sind solche Verteiler auch als sogenannte Etagenverteiler, die in einem Einbaukasten untergebracht werden können. Ein solcher Einbaukasten ist beispielsweise aus der EP-A-1582 656 bekannt geworden. Müssen beispielsweise viele Leitungen zusammengefasst werden, so bedeutet dies einen erheblichen Montageaufwand. Der Erfindung liegt die Aufgabe zugrunde, einen Verteiler der genannten Art zu schaffen, der eine einfachere und rationellere Montage ermöglicht.

Die Aufgabe ist gemäss Anspruch 1 dadurch gelöst, dass die Haltemittel wenigstens zwei Halteelemente aufweisen, die jeweils an einem Ende lösbar an einer Schiene verrastbar und an einem anderen Ende mit dem wenigstens einen Hauptrohr verbindbar sind. Das wenigstens eine Hauptrohr wird somit über Halteelemente mit einer Schiene verbunden, wobei die Verbindung zwischen den Halteelementen und der Schiene jeweils eine Rastverbindung ist. An der Schiene können sehr einfach und schnell auch mehrere Rastelemente befestigt werden. Eine solche Rastverbindung kann sehr schnell und einfach sowie ohne Verwendung besonderer Werkzeuge gefügt werden.

Die Montage ist dann besonders einfach, wenn gemäss einer Weiterbildung der Erfindung die Schiene eine Profilschiene ist, die wenigstens eine sich in Längsrichtung der Schiene erstreckende Nut aufweist, in welcher die Rastelemente verrastbar sind. Eine solche Profilschiene ermöglicht die Befestigung der Halteelemente an beliebiger Stelle. Zudem können sehr viele Halteelemente in einer solchen Nut verankert werden.

Nach einer Weiterbildung der Erfindung ist die genannte Schiene an der Innenseite einer Verteilerkastenrückwand befestigt. An der Verteilerkastenrückwand können auch zwei solche Schienen im Abstand übereinander angeordnet sein. Die Schienen sind hierbei vorzugsweise horizontal ausgerichtet. Für den erfindungsgemässen Verteiler ist jedoch ein Verteilerkasten nicht zwingend. Grundsätzlich können die genannten Schienen beispielsweise auch ohne Kasten an einem Montagegestell befestigt sein.

Nach einer Weiterbildung der Erfindung ist vorgesehen, dass die Schiene eine Schwalbenschwanznut aufweist, in welcher die Halteelemente verrastbar sind. Eine besonders sichere Verrastung ergibt sich dann, wenn gemäss einer Weiterbildung der Erfindung in der Schwalbenschwanznut Positionierungsrillen angeordnet sind. Solche Rillen verhindern eine seitliche Verschiebung der verrasteten Halteelemente. Dennoch ist eine Verrastung an jeder Stelle der Nut möglich. Solche Schienen können sehr kostengünstig und rationell aus Blech hergestellt werden. Vorzugsweise besitzen hierbei die Halteelemente jeweils einen Drehrastbolzen, der in die Nut der Schiene eingesetzt und durch eine Drehbewegung um 90° verrastbar ist. Der Drehrastbolzen bildet hierbei einen Nutenstein.

Nach einer Weiterbildung der Erfindung ist vorgesehen, dass die Halteelemente zwischen den beiden genannten Enden abgekröpft sind, derart, dass sie jeweils um eine Anschlussleitung herumgeführt werden können. Die beiden Enden sind hier vorzugsweise um etwa 90 ° abgekröpft. Dies ermöglicht die Anordnung von zwei versetzt zueinander verlegten Reihen von Leitungen. Diese können sich hierbei im Querschnitt überschneiden, was eine besonders kompakte und damit raumsparende Anordnung ermöglicht. Die Halteelemente für eine vordere Hauptleitung können zwischen zwei Leitungen hindurchgeführt und in einer Schiene verrastet werden. Hierbei werden die Halteelemente jeweils um 90 ° verschwenkt, so dass schliesslich die zweite Hauptleitung mit diesen Halteelementen verbunden werden kann.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnungen näher erläutert. Es zeigen:
- Figur 1: eine räumliche Ansicht eines erfindungsgemässen Verteilers, der in einem Verteilerschrank angeordnet ist,
- Figur 2: ein Vertikalschnitt durch den Verteiler gemäss Figur 1,
- Figur 3: eine Teilansicht des Verteilers und
- Figur 4: eine weitere räumliche Teilansicht des Verteilers, wobei das Einsetzen und Verrasten der Halteelemente illustriert ist.

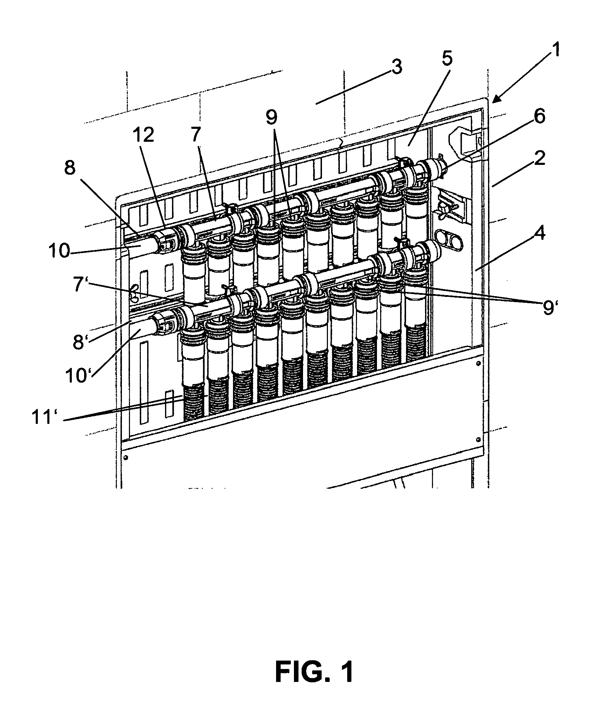

Der in Figur 1 gezeigte Verteiler 1 weist einen Verteilerkasten 2 auf, der in eine Wand 3 eingesetzt ist. Der Verteilerkasten 2 besitzt einen Kastenrahmen 4, in dem vertieft eine Rückwand 5 angeordnet ist. Der Kasten 2 kann wie an sich bekannt mit einer hier nicht gezeigten Tür verschlossen werden. Durch Öffnungen 6 sind in den Verteilerkasten 2 zwei Hautprohre 7 und 7' eingeführt. Diese Hauptrohre 7 und 7' können auch durchgeführt sein. Diese Hauptrohre 7 und 7' sind jeweils mit einem Anschlussfitting 12 an eine Leitung 10 und 10' angeschlossen. Die Leitung 10 dient beispielsweise für die Zufuhr von Kaltwasser und die Leitung 10' für die Zufuhr von Warmwasser. Die Anschlussfittinge 12 können beispielsweise als Steckfittinge ausgebildet sein. Es sind hier aber auch andere Verbindungen denkbar.

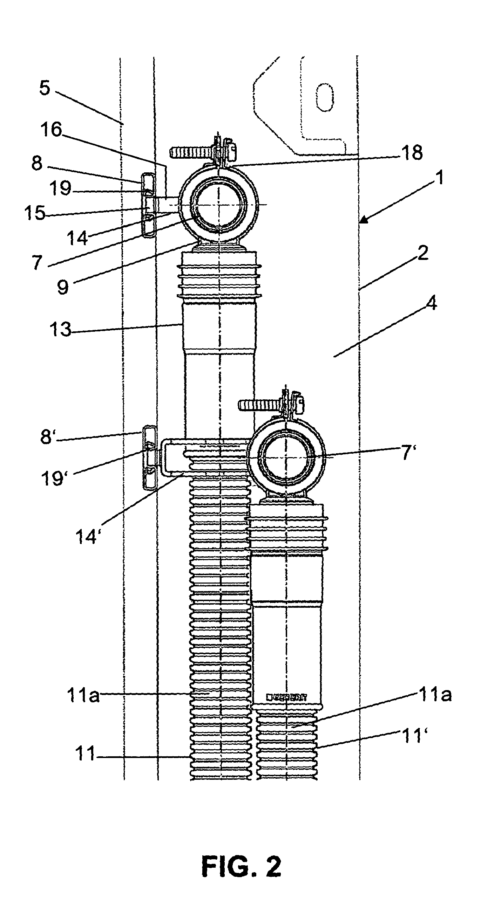

Die Hauptrohre 7 und 7' besitzen jeweils mehrere nach unten gerichtete Abgangsstutzen 9 auf. Die Abgangsstutzen 9 des Hautprohres 7 liegen jeweils in einer vertikalen Ebene, die parallel und im Abstand zu einer Ebene angeordnet ist, in welcher sich die Abgangsstutzen 9' des Hauptrohres 7' erstrecken. Die Abgangsstutzen 9 und 9' können sich aber beispielsweise auch nach oben oder in eine andere Richtung erstrecken. An den Abgangsstutzen 9 und 9' ist jeweils eine Leitung 11 bzw. 11' angeschlossen. Der Anschluss erfolgt gemäss Figur 2 jeweils über einen geeigneten Anschlussfitting 13, der ebenfalls ein Steckfitting sein kann. Die Leitungen 11 und 11' sind jeweils mit einem Schutzrohr 11a versehen. Innerhalb der Schutzrohre 11a ist jeweils ein Leitungsrohr hindurchgeführt, das jeweils an einem Ende an einem Fitting 9 bzw. 9' und an einem anderen Ende beispielsweise an einer hier nicht gezeigten Armatur angeschlossen ist. Das transportierte Medium ist vorzugsweise Wasser. Es ist aber auch ein anderes Medium, beispielsweise Gas denkbar.

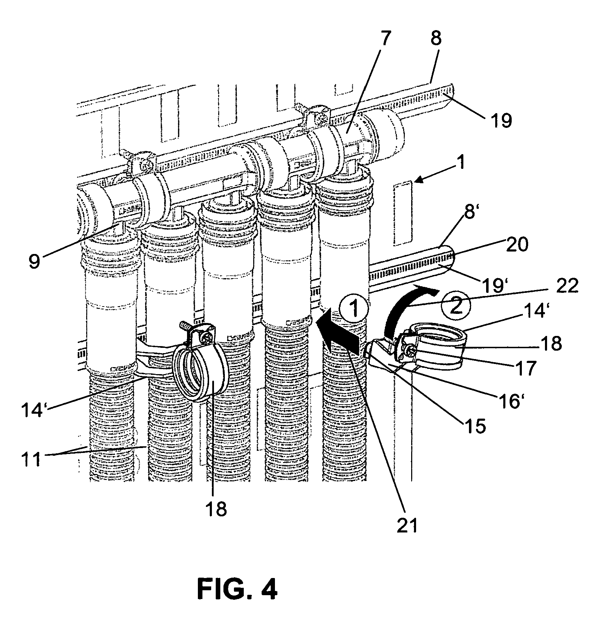

Die Hauptrohre 7 und 7' sind jeweils mit mehreren Halteelementen 14 an einer Schiene 8 bzw. 8' befestigt. Diese Schienen 8 und 8' sind ihrerseits wieder an der Rückwand 5 befestigt, beispielsweise mit der Rückwand 5 verschweisst, an dieser angeschraubt oder aufgerastet. Die Schienen 8 und 8' sind Profilschienen und weisen zumindest eine sich in Längsrichtung der Schiene 8 bzw. 8' erstreckende Nut 19 bzw. 19' auf. Die Nuten 19 und 19' sind vorzugsweise Schwalbenschwanznuten. Diese besitzen im Nutengrund jeweils Positionierrillen 20, die sich quer zur Längsrichtung der Schiene 8 bzw. 8' erstrecken. Solche Positionierrillen 20 sind an sich bekannt. Die Halteelemente 14 und 14' besitzen jeweils gemäss Figur 4 an einem abgekröpften Steg 16 einen Drehrastbolzen 15, mit dem das Halteelement 14 bzw. 14' in einer der beiden Nuten 19 und 19' verrastbar ist.

Die Halteelemente 14 und 14' sind jeweils mit den genannten Drehrastbolzen 15 an der Schiene 8 bzw. 8' befestigbar. Die Halteelemente 14 und 14' sind jedoch unterschiedlich ausgebildet. Das Halteelement 14 besitzt einen vergleichsweise kurzen und geraden Steg 16, welcher gemäss Figur 2 den Drehrastbolzen 15 mit einer Rohrschelle 18 verbindet. Mit dieser Rohrschelle 18 kann das Halteelement 14 in üblicher Weise mit dem Hauptrohr 17 verbunden werden. Die Rohrschelle 18 kann in üblicher Weise einen in Figur 4 gezeigte Kleinschraube 17 aufweisen, die ein Öffnen und Schliessen der Rohrschelle 18 ermöglicht.

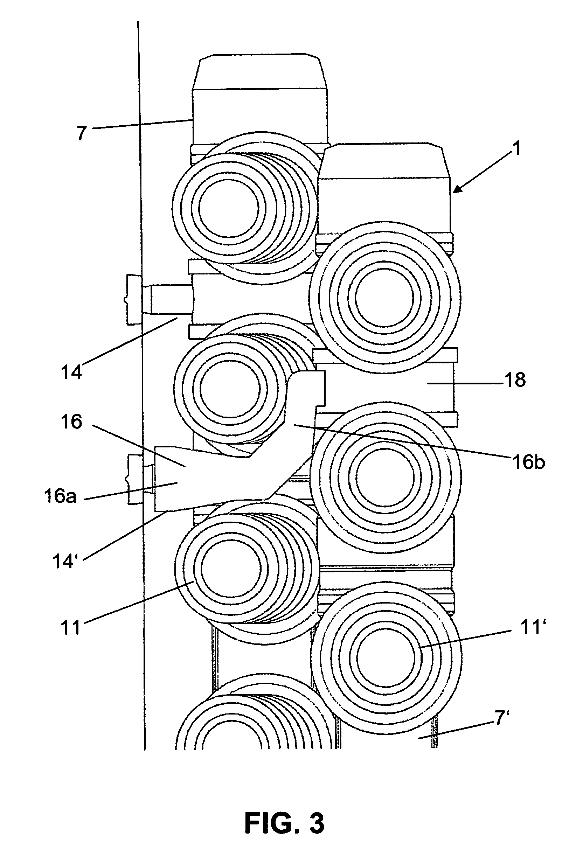

Das Halteelement 14' besitzt einen gekröpften Steg 16', der gemäss der Figur 3 einen ersten Arm 16a und einen zweiten Arm 16b besitzt. Diese beiden Arme 16a und 16b verlaufen im Wesentlichen rechtwinklig zueinander. Am Arm 16a ist der Drehrastbolzen 15 und am Arm 16b die Rohrschelle 18 befestigt. Diese gekröpfte Ausbildung des Steges 16' ermöglicht es, das Halteelement 14' gemäss Figur 4 um eine Leitung 11 herumzuführen. Die Halteelemente 14' können damit gemäss Figur 4 jeweils vor einer Leitung 11 angeordnet werden. Dadurch wird es möglich, die Leitungen 11' jeweils versetzt zu den Leitungen 11 anzuordnen, wie dies in der Figur 3 gezeigt ist. Die Leitungen 11 und 11' können dann somit sehr kompakt in zwei parallelen Ebenen angeschlossen werden. Das Halbverteilermass kann hierbei kleiner sein als der Aussendurchmesser der Leitungen 11 und 11'.

Nachfolgend wird die Montage des Verteilers 1 näher erläutert.

Der Verteilerkasten 2 wird wie an sich üblich in eine Wand 3 eingebaut. In diesem Verteilerkasten können die Schienen 8 und 8' bereits montiert sein. Alternativ ist es jedoch auch möglich, die Schienen 8 und 8' an einem an sich bekannten Montagegestell zu befestigen bzw. diese können bereits am Montagegestell befestigt sein. Ein Verteilerkasten 2 ist somit nicht zwingend. An der oberen Schiene 8 werden nun Halteelemente 14 durch Verrasten befestigt. Hierbei müssen lediglich die entsprechenden Drehrastbolzen 15 in die Nut eingesetzt und durch eine Drehbewegung um 90 ° verrastet werden. Die Anzahl der Halteelemente 14 richtet sich nach der Länge des zu befestigenden Hauptrohres 7. Das Hauptrohr 7 wird nun auf die verrasteten Halteelemente 14 aufgesetzt und die Rohrschellen 18 werden entsprechend um das Hauptrohr 17 gelegt und befestigt. Am Hautprohr 7 können nun die Leitungen 11 befestigt werden. Die Befestigung erfolgt beispielsweise durch Aufstecken der Anschlussfittinge 13 auf die Abgangsstutzen 9.

Nun werden die Halteelemente 14' auf die untere Schiene 18' aufgerastet. Dies ist in Figur 4 gezeigt. Wie ersichtlich wird jeweils ein Drehrastbolzen 15 zwischen zwei benachbarte Leitungen 11 hindurchgeschoben und auf der Schiene 18' durch eine Drehbewegung um 90 ° verrastet. Die Steckbewegung ist in Figur 4 mit einem Pfeil 21 und die Drehbewegung mit einem Pfeil 22 angedeutet. Die Rohrschellen 18 sind wie bereits erwähnt jeweils vor einer Leitung 11 angeordnet. Das Hauptrohr 7' kann nun in die Rohrschellen 18 eingesetzt und mit diesem befestigt werden. An dem nun positionierten und befestigten Hauptrohr 7' können nun die weiteren Leitungen 11' angeschlossen werden. Hierbei ist wieder eine Befestigung durch Aufstecken möglich.

### BEZUGSZEICHENLISTE

- 1: Verteiler
- 2: Verteilerkasten
- 3: Wand
- 4: Kastenrahmen
- 5: Rückwand
- 6: Öffnung
- 7: Hauptrohr
- 8: Schiene
- 8': Schiene
- 9: Abgangsstutzen
- 10: Leitung
- 11: Leitung
- 11 a: Schutzrohr
- 12: Anschlussfitting
- 13: Anschlussfitting
- 14: Haltelement
- 15: Drehrastbolzen
- 16: Steg
- 16a: Arm
- 16b: Arm
- 17: Klemmschraube
- 18: Rohrschelle
- 19: Nut
- 20: Positionierrillen
- 21: Pfeil
- 22: Pfeil

## Patentansprüche

1. Verteiler für eine Wasserleitungsanlage, mit wenigstens einem Hauptrohr (7, 7'), das mehrere Abgangsstutzen (9) aufweist und mit Haltemitteln, mit denen das wenigstens eine Hauptrohr (7, 7') befestigbar ist, **dadurch gekennzeichnet, dass** die Haltemittel wenigstens zwei Halteelemente (14, 14')aufweisen, die jeweils an einem Ende lösbar an einer Schiene (8, 8') verrastbar und an einem anderen Ende mit dem wenigstens einen Hauptrohr (7, 7') verbindbar sind.

2. Verteiler nach Anspruch 1, **dadurch gekennzeichnet, dass** die Schiene (8, 8') eine Profilschiene ist, die wenigstens eine sich in Längsrichtung der Schiene (8, 8') erstreckende Nut (19) aufweist, in welcher die Halteelemente (14, 14') verrastbar sind.

3. Verteiler nach Anspruch 1 oder 2, **dadurch gekennzeichnet, dass** die genannte Schiene (8, 8') an der Innenseite einer Verteilerkastenrückwand (15) befestigt ist.

4. Verteiler nach einem Anspruch 2 oder 3, **dadurch gekennezeichnet, dass** die Nut (19) eine Schwalbenschwanznut ist.

5. Verteiler nach einem der Ansprüche 2 bis 4, **dadurch gekennzeichnet, dass** in der Nut Positionierungsrillen (20) angeordnet sind.

6. Verteiler nach einem der Ansprüche 1 bis 5, **dadurch gekennzeichnet, dass** die Halteelemente (14, 14') jeweils einen Drehrastbolzen (15) aufweisen, mit denen sie jeweils an der Schiene (8, 8') verrastbar sind.

7. Verteiler nach einem der Ansprüche 1 bis 6, **dadurch gekennzeichnet, dass** die Halteelemente (14, 14')zwischen den beiden genannten Enden abgekröpft sind, derart, dass sie jeweils um eine Anschlussleitung (11) herum geführt werden können.

8. Verteiler nach einem der Ansprüche 1 bis 7, **dadurch gekennzeichnet, dass** die Halteelemente (14, 14') jeweils eine Rohrschelle (18) aufweist, mit welcher das wenigstens eine Hauptrohr (7, 7') am Halteelement (14, 14') befestigbar ist.

9. Verteiler nach einem der Ansprüche 1 bis 8, **dadurch gekennzeichnet, dass** zwei parallel und im Abstand zueinander angeordnete Schienen (8, 8') vorgesehen sind, an denen jeweils ein Hauptrohr (7, 7') befestigbar ist.

10. Verteiler nach Anspruch 9, **dadurch gekennzeichnet, dass** die Anschlussstutzen (9) des einen Hauptrohrs (7) in Längsrichtung des Hauptrohrs (7) gesehen gegenüber dem Anschlussstutzen (9') des anderen Hauptrohres (7') versetzt sind.
